# EUROPEAN PATENT APPLICATION

(11) **EP 2 743 840 A1**
(43) Date of publication of application: **18.06.2014**
(21) Application number: 13186081.9
(22) Date of filing: 26.09.2013
(51) Int. Cl.: G06F 17/30

(54) **System for providing a travel guide**

(30) Priority: 17.12.2012 KR 20120147627
(71) Applicant: Samsung Electronics Co., Ltd, Gyeonggi-do 443-742 (KR)
(72) Inventor: Kang, Doo-Suk, 443-742 Gyeonggi-do (KR); Lee, Yu-Jin, 443-742 Gyeonggi-do (KR); Yim, Sae-Mee, 443-742 Gyeonggi-do (KR); Jung, Eui-Chang, 443-742 Gyeonggi-do (KR); Choi, Bo-Kun, 443-742 Gyeonggi-do (KR); Hwang, Min-Kyung, 443-742 Gyeonggi-do (KR)
(74) Representative: Jenkins, Richard Gavin

(57) **Abstract**

A system for providing a travel guide transmits place information indicating a place to a computer in response to a travel guide being requested for the place. The system receives from the computer visit time information about the place generated based on analyzing times at which corresponding media files were generated in the place and configures a travel guide based on the received visit time information.

## Description

### FIELD OF THE INVENTION

The present invention relates to a system for providing a travel guide.

### BACKGROUND

In known terminals such as smart phones and tablet Personal Computers (PCs), a terminal is equipped with a camera module to capture an image and a user may upload a captured image to a specific server or Web site. The image is combined with information about the time and place in which the image is captured, as tag information or metadata.

As information collection and processing technology develops and networks deployed, a terminal user may receive travel guidance about a place that he or she will visit from a travel guide provider. Specifically, the user may transmit information about a place to visit to the travel guide provider and receive a travel guide about the place from the travel guide provider where previously, a travel information service merely notified a user of the location of a place to visit or the distance and travel time from a current location to the place. A system according to invention principles addresses a need to provide travel guide information on demand.

The above information is presented as background information only to assist with an understanding of the present disclosure. No determination has been made, and no assertion is made, as to whether any of the above might be applicable as prior art with regard to the present invention.

### SUMMARY

The inventors have advantageously recognized a need for providing a broad range of travel information to remotely located mobile devices on demand.

Aspects of the present invention are to address at least the above-mentioned problems and/or disadvantages and to provide at least the advantages described below. Accordingly, an aspect of the present invention is to provide a method of providing improved and reliable travel information to a user.

A method provides a travel guide in a terminal by transmitting place information identifying a place, to a computer, in response to a travel guide being requested for the place; determining visit time information about the place generated from media files received from the computer in response to the transmitted place identification, the visit time information being determined based on times at which corresponding media files were generated in the place; and configuring a travel guide based on the received visit time information. A media file comprises a photograph taken in the place at a particular time, for example, and the visit time information indicates the number of media files generated in the place during predetermined intra-day time periods, an intra-day time period in which most media files were generated in the place, or a intra-day time period in which fewest media files were generated in the place.

In a feature of the invention, the visit time information is generated based on a weight assigned to each of the media files determined based on at least one of the number of views for the media file, a rating of the media file, and data indicating reliability of a creator of the media file. Further, the configuration of the travel guide comprises configuring the travel guide to include information about an intra-day time period in which most or fewest media files were generated in the place. Thumbnail images of the media files generated in the place from the computer are received and the travel guide is configured to include the thumbnail images. If the place includes a plurality of sub-places, the visit time information is visit time information concerning each of the sub-places generated based on times of generating media files in the sub-place. Also the travel guide is configured by planning a tour course connecting the sub-places based on the visit time information about each of the sub-places.

In a further feature of the invention a method provides a travel guide in a terminal, by transmitting current location information and schedule information of a user, to a computer; receiving recommended place information indicating a recommended place within a reachable range of the user from the computer in response to the transmitted information; and configuring a travel guide based on the received recommended place information. The recommended place information includes at least one of information indicating a name of the recommended place, information indicating a location of the recommended place, and a thumbnail image of a media file generated in the recommended place.

In another feature of the invention, a method provides a travel guide in a computer by receiving place information identifying a place from a terminal, in response to a travel guide being requested for the place; analyzing times at which corresponding media files were generated in the place; generating visit time information about the place in response to an analysis result; and transmitting the generated visit time information to the terminal. The visit time information indicates the number of media files generated in the place during predetermined intra-day time periods, an intra-day time period in which most media files were generated in the place, or a intra-day time period in which fewest media files were generated in the place.

In a further feature a method provides a travel guide in a computer by receiving, current location information and schedule information of a user from a user; calculating a reachable range of the user in response to the current location information and schedule information of the user and a current time; detecting a place within the reachable range; and transmitting information about the detected place to the terminal.

In addition, an apparatus provides a travel guide in a terminal using a communication unit, a sensor unit configured to acquire current location information about a user, a memory configured to store schedule information about the user and a controller. The controller is configured to transmit the current location information received from the sensor unit and the schedule information stored in the memory to the computer through the communication unit, to receive recommended place information indicating a recommended place within a reachable range of the user from the computer through the communication unit, and to configure a travel guide based on the received recommended place information. An apparatus provides a travel guide in a computer using a communication unit and a controller. The controller being configured to, receive place information identifying a place from a terminal through the communication unit in response to a travel guide being requested for the place, analyze times of generating media files in the place and generate visit time information about the place based on an analysis result, and to transmit the generated visit time information to the terminal through the communication unit.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:
FIG. 1 illustrates a method of providing a travel guide according to invention principles;
FIG. 2 is a flowchart illustrating a method of providing a travel guide in a terminal according to invention principles;
FIGS. 3A to 3F illustrate visit time information according to invention principles;
FIG. 4 is a flowchart illustrating a method of providing a travel guide in a server according to invention principles;
FIGS. 5A and 5B illustrate travel guide screens configured according to invention principles;
FIG. 6 is a flowchart illustrating a method of providing a travel guide in a server according to invention principles;
FIG. 7 illustrates tree-type place information according to invention principles;
8A to 8F illustrate visit time information according to invention principles;
FIG. 9 is a flowchart illustrating a method of providing a travel guide in a terminal according to invention principles;
FIGS. 10A to 10F illustrate travel guide screens configured according to invention principles;
FIG. 11 illustrates a screen used to request travel guide creation according to invention principles;
FIG. 12 is a flowchart illustrating a method of providing a travel guide in a terminal according to invention principles;
FIG. 13 is a flowchart illustrating a method of providing a travel guide in a server according to invention principles;
FIG. 14 illustrates determination of a range of distance that can be reached by a user according to invention principles;
FIG. 15 illustrates a travel guide screen configured according to invention principles;
FIG. 16 is a block diagram of a travel guide configuring apparatus in a terminal according to invention principles; and
FIG. 17 is a block diagram of a travel guide configuring apparatus in a server according to invention principles.

Throughout the drawings, like reference numerals will be understood to refer to like parts, components, and structures.

### DETAILED DESCRIPTION

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

Exemplary embodiments of the present invention will be provided to achieve the above-described technical aspects of the present invention. In an exemplary implementation, defined entities may have the same names, to which the present invention is not limited. Thus, exemplary embodiments of the present invention can be implemented with same or ready modifications in a system having a similar technical background.

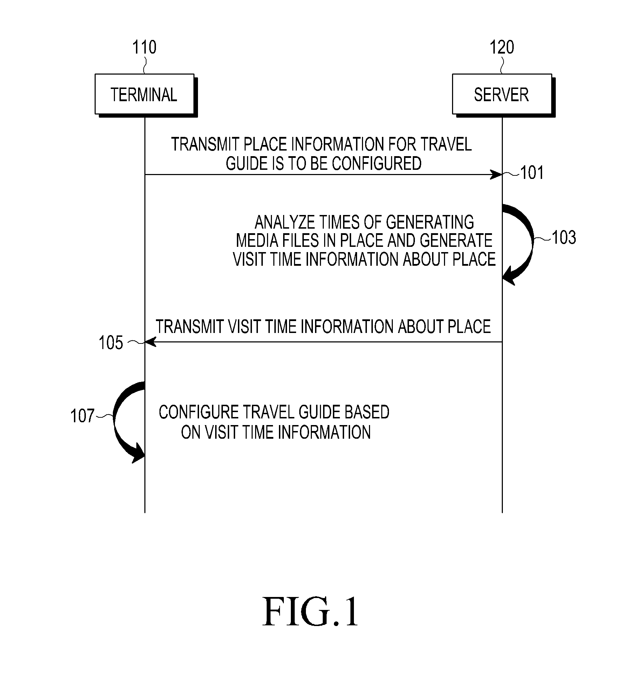

With reference to FIG. 1, in step 101, a terminal 110 transmits information about a place to be included in a travel guide to a server 120. The place information may specify information that a user has input or selected to receive in a travel guide, for example, such as a name of a place. In step 103, the server 120 analyzes times when media files were created in the place based on the received place information. The media files include an image file and a video file, for example. The times of creating the media files are analyzed based on metadata or tag information combined with the media files. The media files to be analyzed are files stored in the server 120 or files collected from the Web. The server 120 generates information about visit times of the place based on the analysis result. The visit time information may indicate the number of media files created in the place during predetermined time zones, a time zone during which the most media files were created in the place, or a time zone during which the fewest media files were created in the place.

In step 105, the server 120 transmits the generated visit time information to the terminal 110 and the terminal 110 configures a travel guide based on the visit time information received from the server 120 in step 107. The travel guide includes information recommending a time to visit a place. The travel guide further includes information comprising thumbnail images of the media files created in the place and routes to the place and the terminal 110 displays the travel guide in a preset display area. The system advantageously recommends a visit time for a user to visit an intended place.

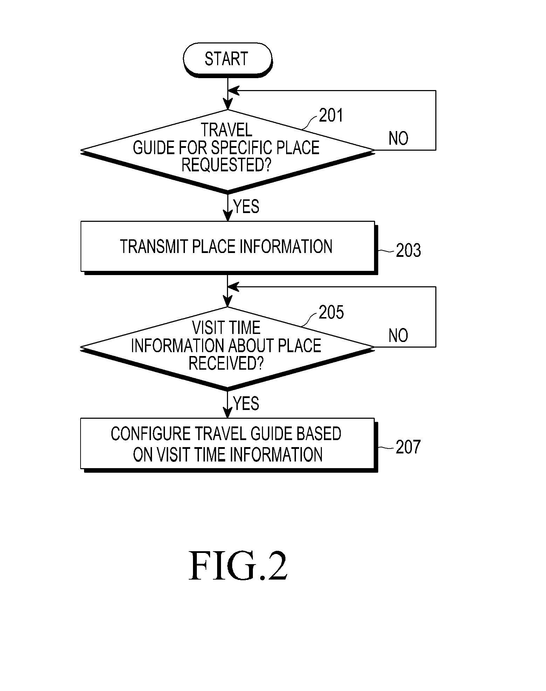

FIG. 2 shows a flowchart illustrating a method of providing a travel guide in the terminal. The terminal determines whether a request for configuring a travel guide for a specific place has been received from the user in step 201. Upon receipt of the travel guide configuration request, the terminal in step 203 provides a guide screen on which the user may enter (i.e. select) information about a specific place. The place information is input by means of an input device such as a touch screen, an electronic pen, a keyboard, and a mouse. The place information is input by a user in order to receive a travel guide, for example, the name of the place. In step 203, the terminal transmits the user-input place information to the server.

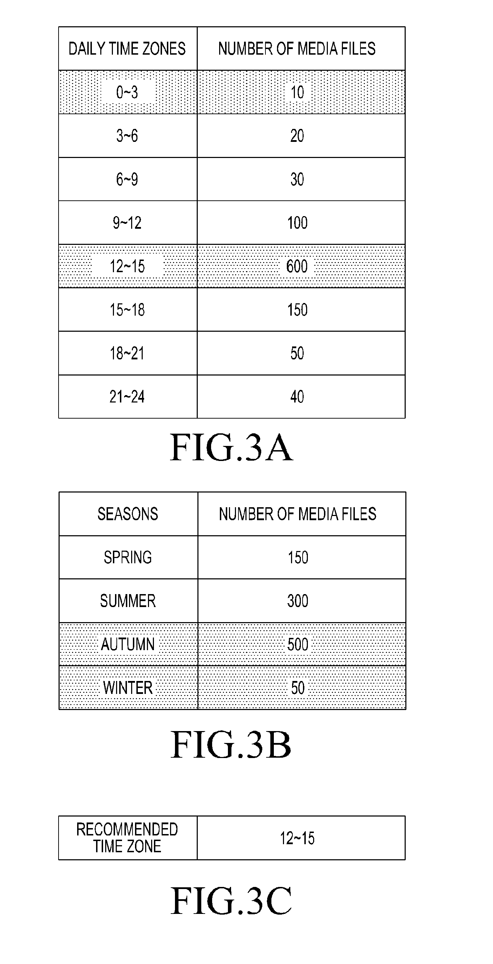

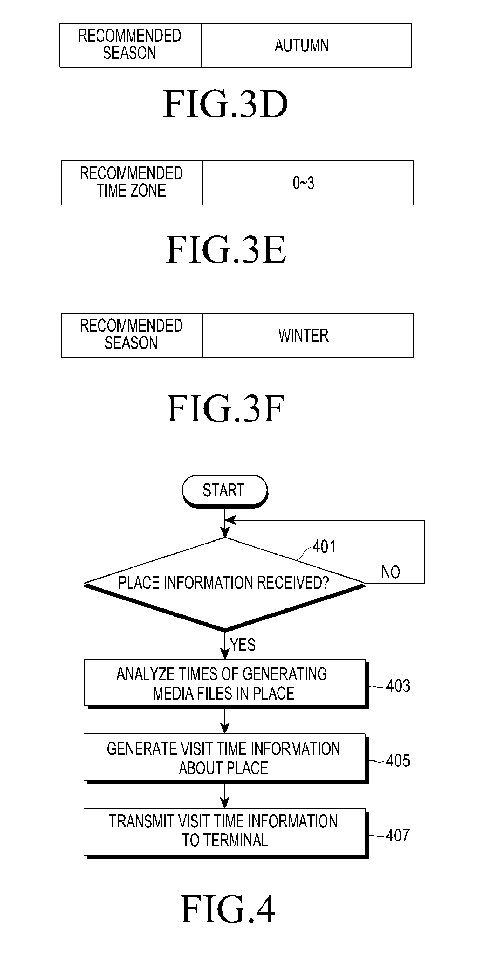

The terminal determines whether visit time information about the place has been received in step 205 an if so performs step 207. The visit time information indicates the number of media files generated in the place during predetermined intra-day time periods of a 24 hour day (time zones). FIGS. 3A and 3B show a daily time zone and season during which the most media files were generated in the place as identified in FIGS. 3C and 3D. FIGS. 3E and 3F identify a time zone during which the fewest media files were generated in the place. The terminal configures a travel guide for the place based on the received visit time information in step 207. Specifically, the terminal configures the travel guide to include information about a recommended time zone for the user to visit the place. The recommended time zone may be the time zone during which the most or fewest media files were generated according to a predetermined setting or user selection. The travel guide further includes thumbnails of the media files generated in the place, a route from a current location to the place, a time required to reach the place, a distance to the place, and map information around the place.

FIG. 4 shows a flowchart of a process for providing a travel guide using a server that determines whether information about a specific place such as the place name required to configure a travel guide has been received from the terminal in step 401. Upon receipt of the place information from the terminal, the server in step 403 analyzes times when media files were generated in the place indicated by the received place information. The media files to be analyzed are media files stored in the server or collected from the Web and include images and videos.

The times when the media files were generated are analyzed using metadata combined with each media file. The metadata includes information about the place and time at which the media file was generated. Accordingly, the server may search for media files generated in the place indicated by the place information received from the terminal, referring to the metadata of each media file. The place information included in the metadata of each media file may be Global Positioning System (GPS) information. Therefore, if the place information received from the terminal indicates the name of a specific place, the server converts the received place information to GPS information and determines whether each media file was generated in the place indicated by the received place information by comparing the converted GPS information with the GPS information included in the metadata of the media file. The received place information is converted to the GPS information using preliminarily built map information using known GPS data format requirements. In response to detection of the generation of the media files in the place indicated by the place information received from the terminal, the server analyzes times when individual media files were generated, using time information metadata of the media file.

The media files generated in the place indicated by the place information received from the terminal are detected based on tag information combined with each of the media files. A media file creator combines a media file with information about the media file, for example, information about a place in which the media file was generated, as tag information. If the place information received from the terminal indicates the name of a specific place, the server determines whether a media file was generated in the place indicated by the received place information using the tag information of the media file. In step 405, the server generates visit time information about the place based on the analysis results of step 403 and transmits the generated visit time information to the server in step 407.

In generating the visit time information, the server in an embodiment, applies a weight to each media file determined based on at least one of the number of views for the media file, a rating of the media file, and the reliability of a creator of the media file. For example, the server applies a higher weight to a media file having a higher number of views or a media file whose creator has a higher reliability. A media file creator with a higher reliability means a file creator that has created more media files. Specifically, the server analyzes the creators of total searched media files or the creators of media files determined as generated in the place and assigns a higher weight to a media file creator that has generated more media files. The media file creator is analyzed based on the metadata or tag information of the media file. In addition, the server assigns a higher weight to a media file having a higher rating. Media files may be rated by, for example, viewers, creators, and specialists in a specific field.

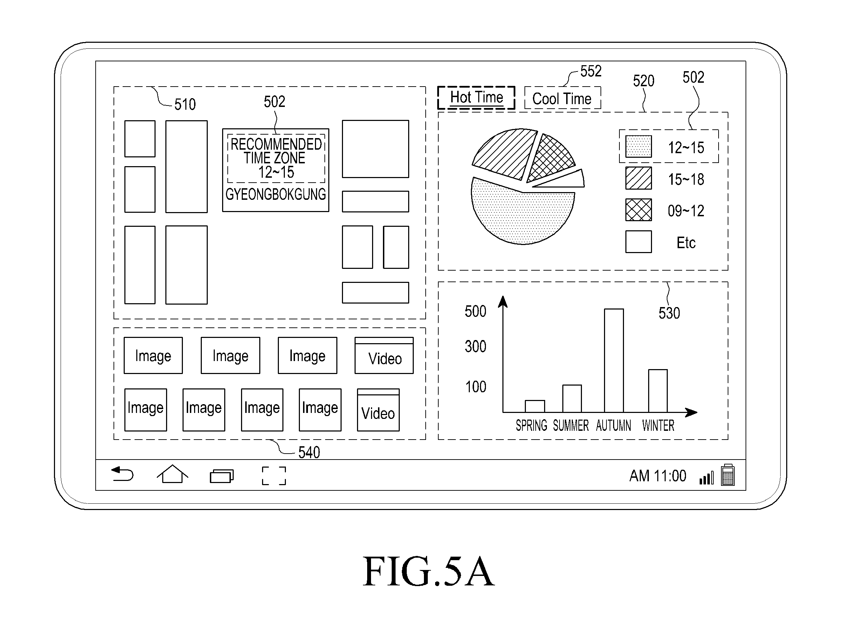

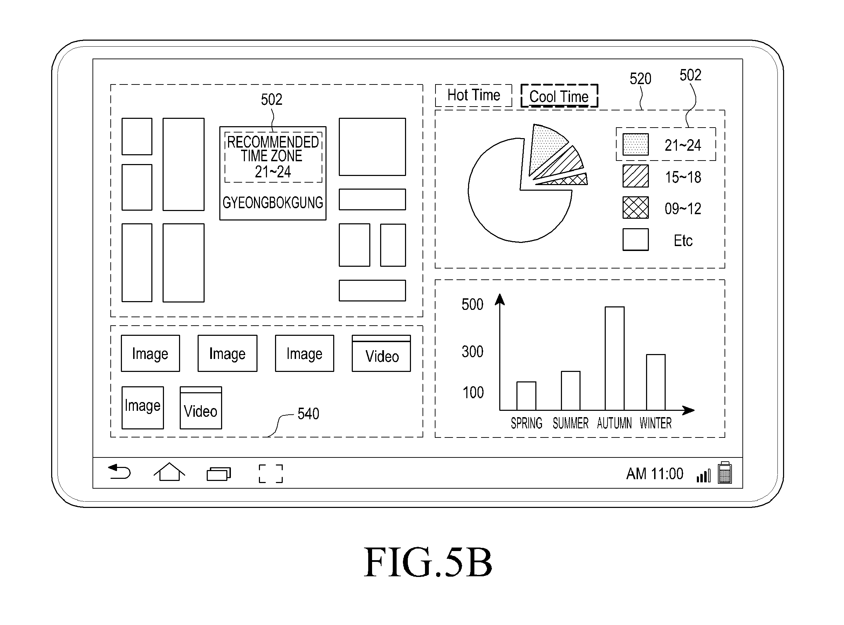

FIGS. 5A and 5B illustrate travel guide screens configured by the terminal to include a recommended time zone for a user to visit a place, based on visit time information received from the server. FIG. 5A illustrates a travel guide in which a time zone corresponding to the most media files generated in the place is set as a recommended time zone 502. The terminal configures a map including a user-input place and displays the map in a preset display area 510. For example, if the user inputs a palace name "Gyeongbokgung", the terminal builds a map including places within a predetermined distance from "Gyeongbokgung" and displays the map. The terminal receives information required to build the map from the server and configures the map using a known map provider service e.g. GOOGLE™ maps.

The terminal converts visit time information received from the server to a graphic image and displays the graphic image in a preset display area. The terminal receives a plurality of pieces of visit time information for different time zones from the server and converts each piece of visit time information to a graphic image and displays the graphic image in a preset display area. In response to visit time information as illustrated in FIGS. 3A and 3B being received, the visit information is converted to graphic images and displayed in display areas 520 and 530. The terminal downloads a predetermined number of thumbnail images related to media files generated in the user-input place from the server and displays the thumbnail images in a preset display area 540. The downloaded thumbnail images comprise thumbnails of media files that were generated during a recommended time zone (time period) within a daily 24 hour cycle.

A travel guide is configured to include information identifying a time zone during which the fewest media files were generated in the place. The type of a recommended time zone is set according to menu selection or by default. In FIG. 5A, a travel guide is configured to include information identifying a time zone during which the most media files were generated, by default. If the user selects a menu requesting guidance of a time zone during which the fewest media files were generated, the terminal re-configures the travel guide as illustrated in FIG. 5B. This means that the terminal may re-select the recommended time zone 502 and display the new recommended time zone. Additionally, the terminal analyzes the visit time information, generates a graphic image that arranges time zones in an ascending order of the numbers of generated media files, and displays the graphic image in the display area 520. If the travel guide is set to display the thumbnail images of media files, the terminal requests the thumbnail images of media files generated during the recommended daily time zone period from the server and displays the thumbnails received from the server in the display area 540.

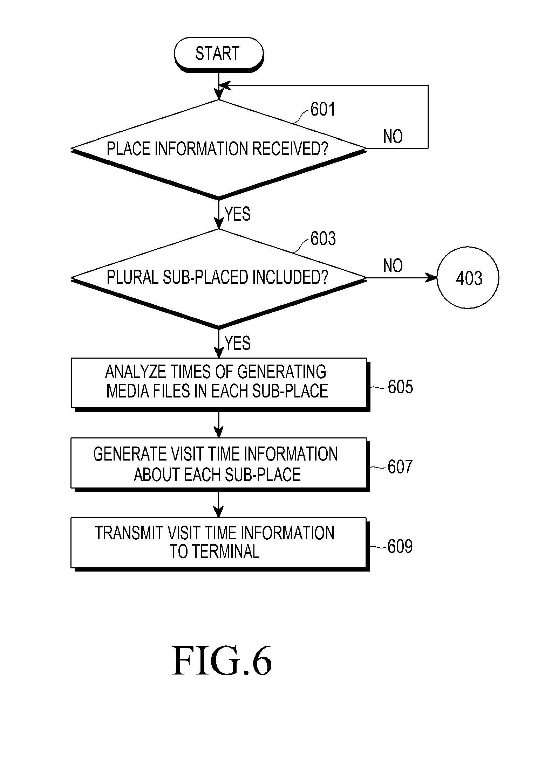

FIG. 6 shows a flowchart illustrating a method of providing a travel guide in a server that determines whether information about a specific place required to configure a travel guide has been received from the terminal in step 601. In response to receipt of the place information, the server in step 603 determines whether the place indicated by the received place information is divided into a plurality of sub-places. If the place is divided into a plurality of sub-places, the server performs step 605, otherwise, the server goes to step 403 of FIG. 4.

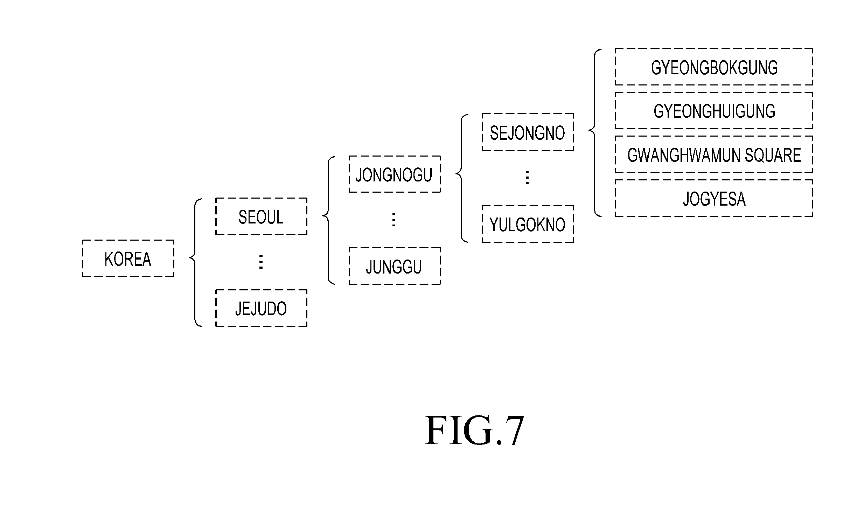

The determination as to whether the place is divided into a plurality of sub-places is using a predetermined a database of information associating places and their names with corresponding sub-places. For example, the server database information includes collated sub-place data of each place in the form of a hierarchical tree, as illustrated in FIG. 7. If the place information received from the terminal indicates a street name "Sejongno", the server determines whether there is a sub-place for "Sejongno" comprising "Gyeongbokgung", "Gyeonghuigung", "Gwanghwamun Square", and "Jogyesa" in the database.

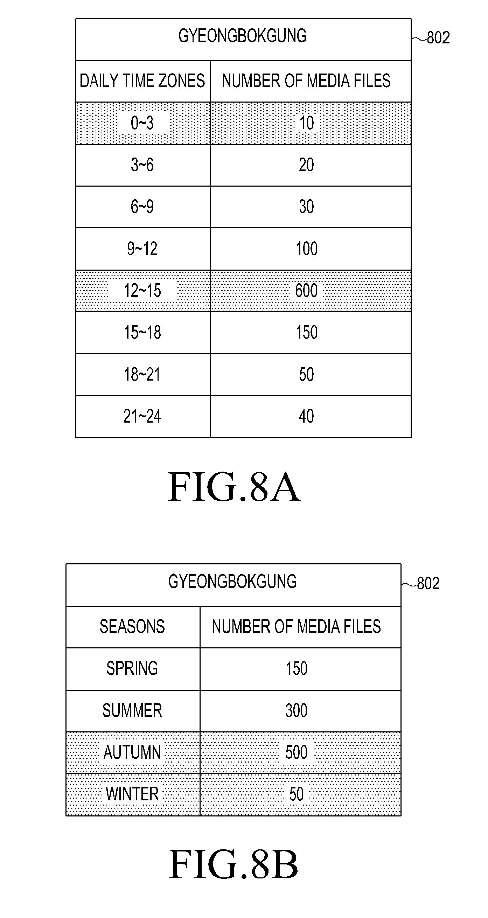

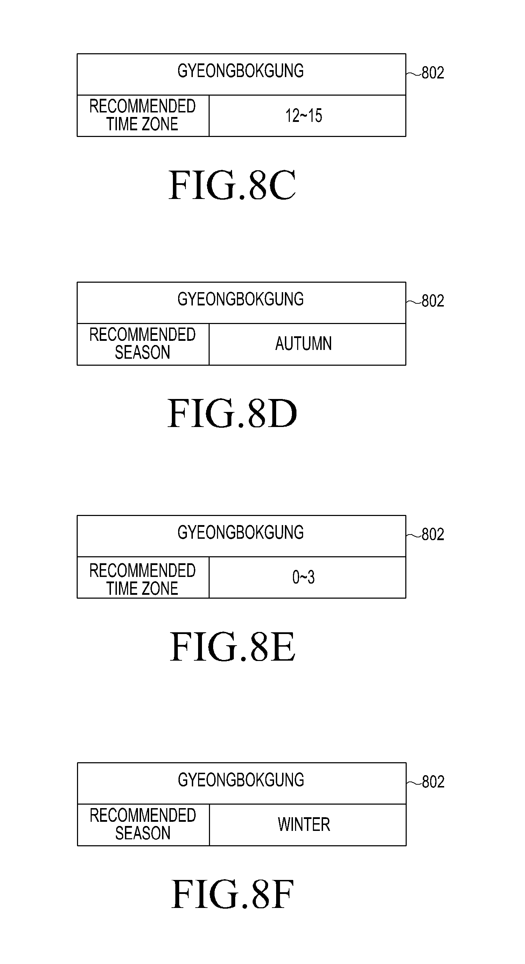

The server analyzes times when media files were generated in each sub-place in step 605 and in step 607, the server generates visit time information about each sub-place based on the analysis results of step 605. The visit time information is configured as illustrated in FIGS. 3A to 3F except that information 802 identifying a sub-place is added to visit time information about the sub-place, as illustrated in FIGS. 8A to 8F. FIGS. 8A to 8F illustrate examples of visit time information about one sub-place "Gyeongbokgung", by way of example. In step 609, the server transmits the generated visit time information about each sub-place to the terminal and a message identifying associated sub-places.

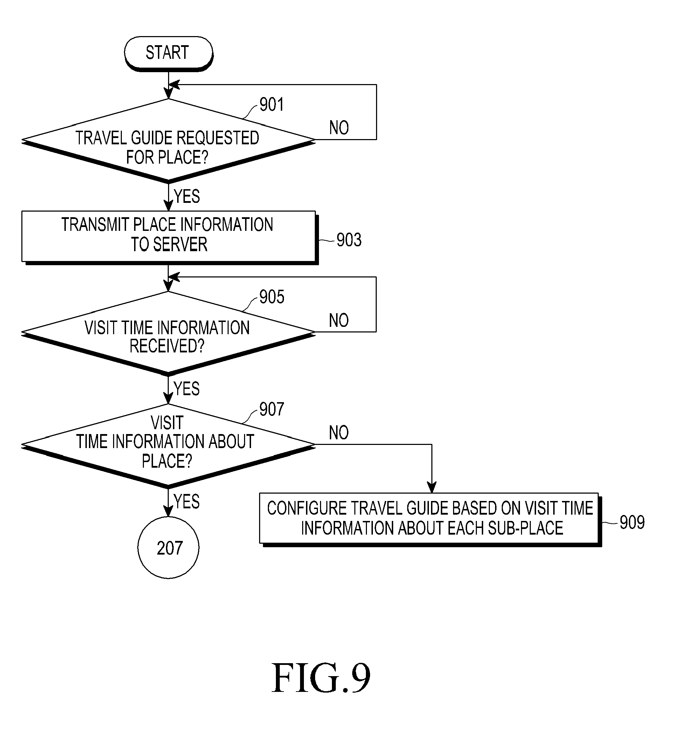

FIG. 9 shows a flowchart illustrating a method of providing a travel guide in a terminal where the terminal transmits information about a place for which a user requests a user guide to the server in steps 901 and 903. Steps 901 and 903 are performed in the same manner as steps 201 and 203 of FIG. 2 and thus they will not be described in detail. In step 905, the terminal determines whether visit time information has been received from the server. Upon receipt of the visit time information, the terminal in step 907, determines whether the visit time information is about the place indicated by the user-input place information and if so, configures a travel guide for the place in step 207 of FIG. 2. If the visit time information is not about the place indicated by the user-input place information but rather concerns sub-places of the place in step 907, the terminal in step 909 configures a travel guide based on the visit time information about each sub-place.

The determination as to whether the visit time information is about sub-places of the place is performed, for example, by checking a specific field in the visit time information. If a field indicating a place is set in visit time information about each sub-place, the terminal determines that the visit time information is about the sub-places of the place. Alternatively or additionally, if the field indicates a place name different from the place indicated by the user-input place information, the terminal determines that the visit time information is about the sub-places of the place. Alternatively or additionally, if a specific field included in a message carrying the visit time information about the sub-places of the place is set to a predetermined value, the terminal determines that the visit time information is about the sub-places of the place.

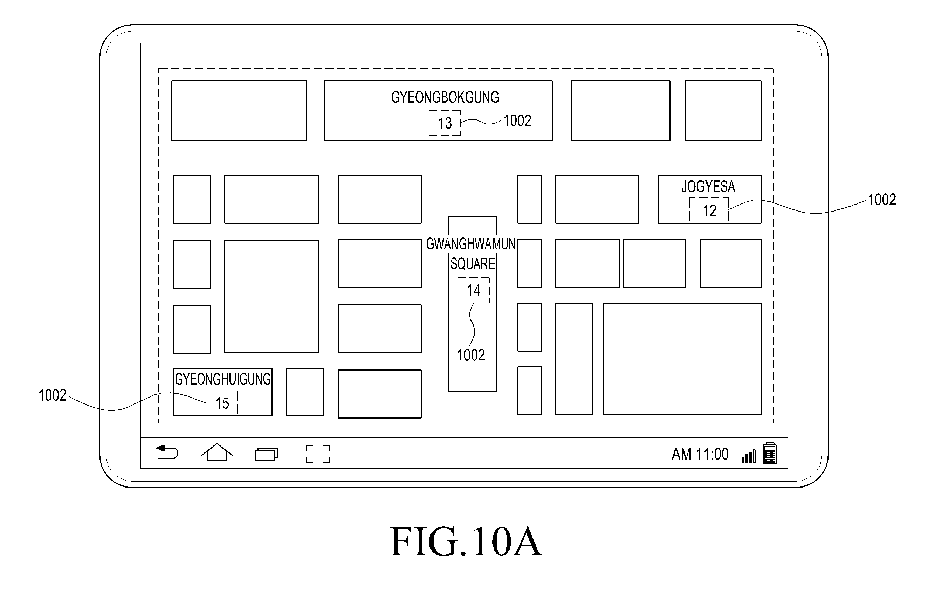

FIGS. 10A to 10F illustrate configured travel guide screens where if a place indicated by place information for which a travel guide is requested includes a plurality of sub-places, the terminal displays a recommended time zone for each sub-place. For example, using the database information of FIG. 7, in response to receipt of place information indicating a street name "Sejongno" from the user, the terminal receives from the server visit time information about each sub-place of "Sejongno", specifically visit time information about "Gyeongbokgung", "Gyeonghuigung", "Gwanghwamun Square", and "Jogyesa" and displays recommended intra-day time period 1002 for the sub-places in preset display areas. The terminal additionally displays a map including the sub-places. A recommended intra-day time period may be expressed as any one hour included in the intra-day time period. For example, in the case where a recommended intra-day time period is expressed on an hourly basis, if an intra-day time period ranges from 12:30p.m. to 1:30p.m., this intra-day time period may be expressed as 1p.m.

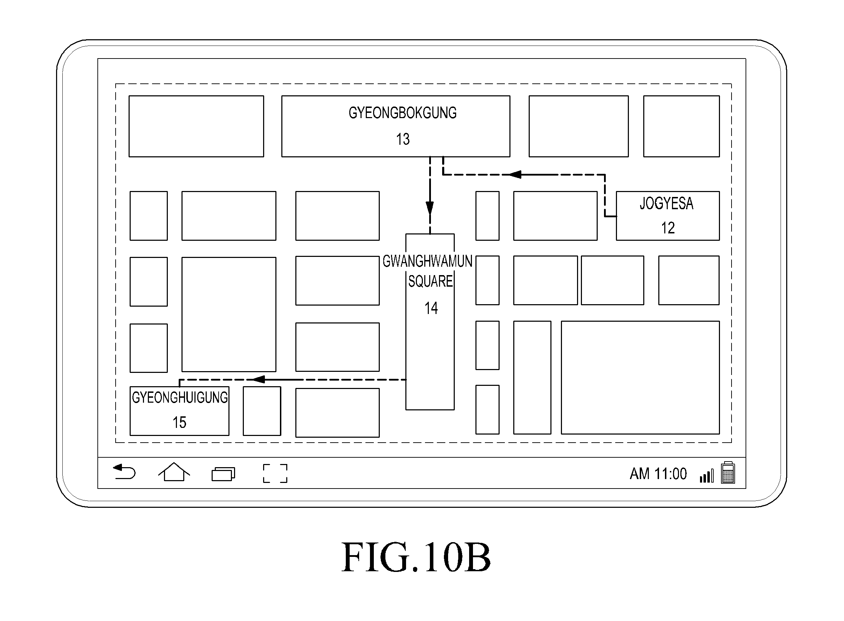

The terminal may set a tour course running through the sub-places and display the tour course. For example, if the recommended intra-day time periods of "Jogyesa", "Gyeongbokgung", "Gwanghwamun Square", and "Gyeonghuigung" are 12:00, 13:00, 14:00, and 15:00, respectively, the terminal may plan a tour course connecting the sub-places sequentially and display the tour course as illustrated in FIG. 10B.

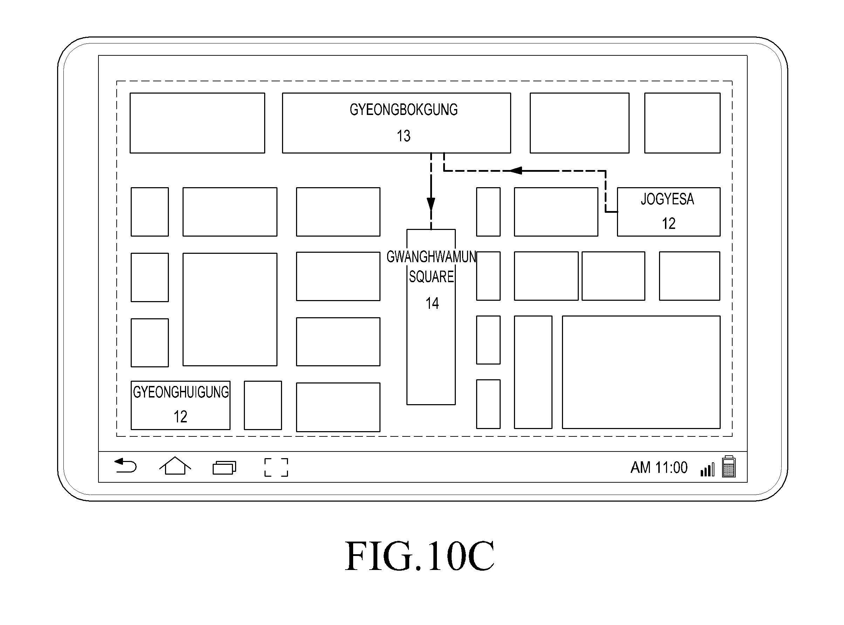

To plan the tour course, the terminal may receive information about at least one of the distances and travel times between the sub-places from the server. If the terminal determines based on an analysis of the received information, that it is impossible to visit the sub-places during the respective recommended intra-day time periods, the terminal may plan a tour course omitting one or more sub-places. Specifically, the terminal may plan a tour course with sub-places available during their respective recommended intra-day time periods. For example, if the recommended intra-day time periods of "Jogyesa" and "Gyeonghuigung" are identical as illustrated in FIG. 10C, the terminal may exclude one of the sub-places in planning a tour course.

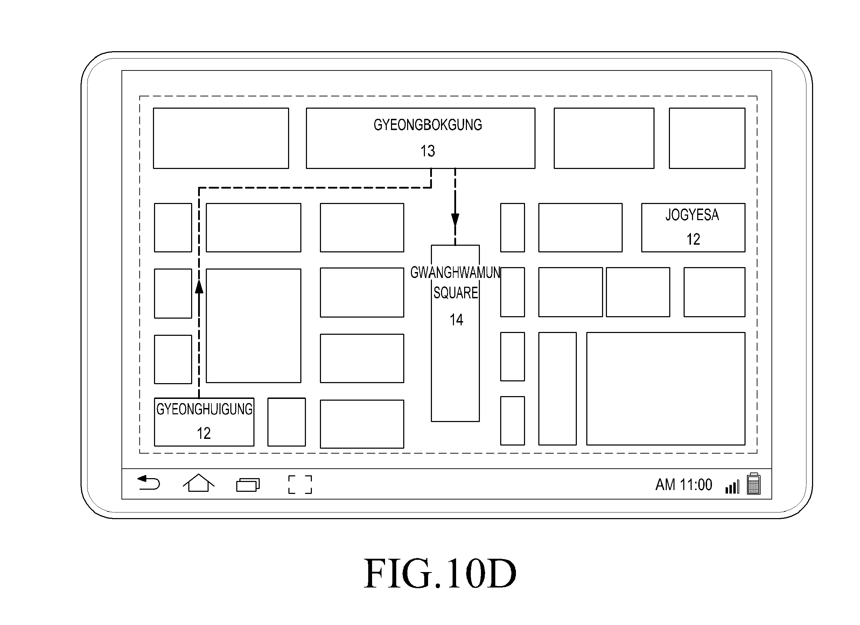

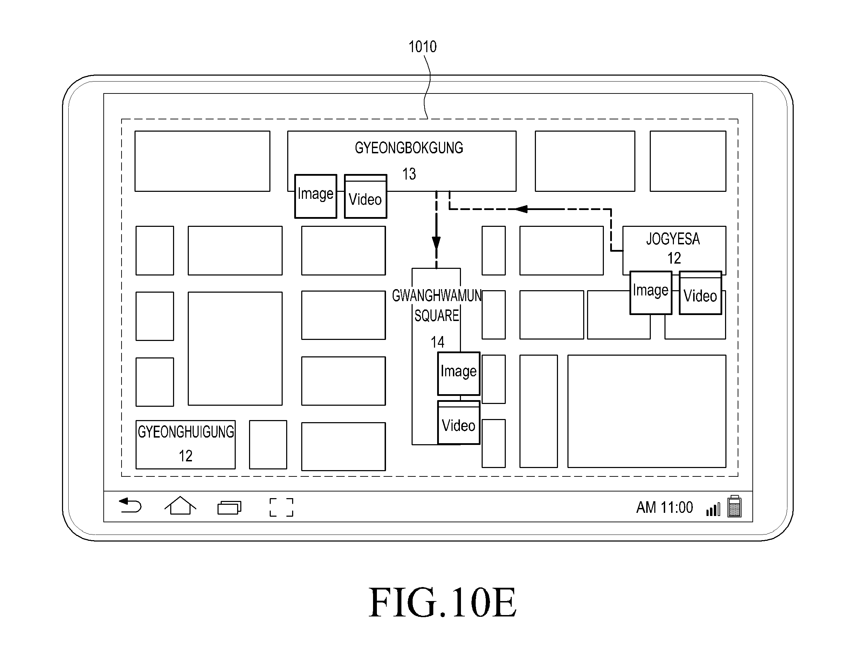

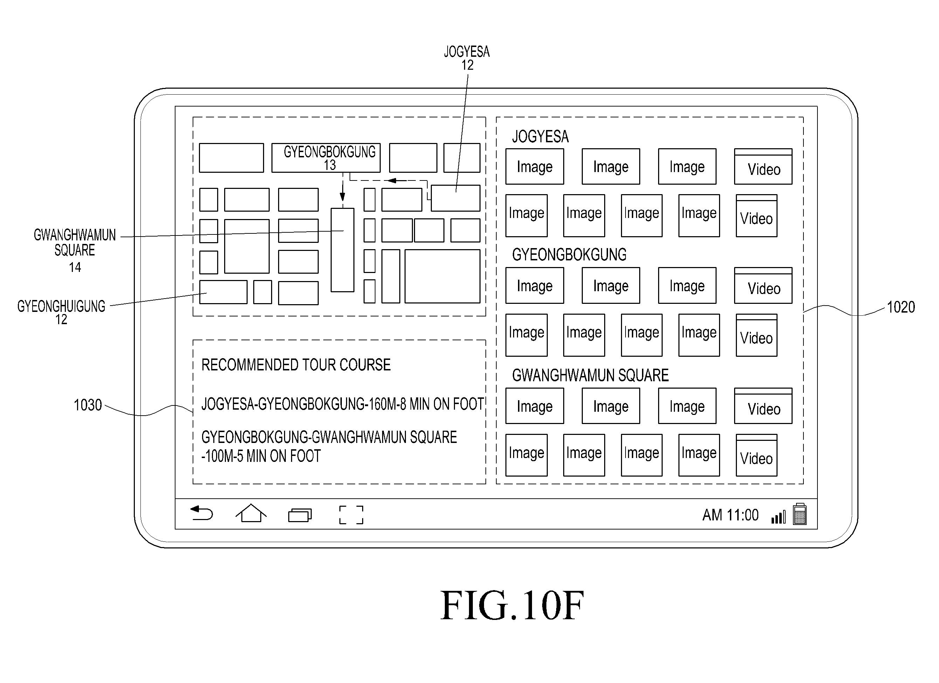

The terminal determines which sub-place to be excluded based on the distances between the sub-places. For example, if a tour course "Jogyesa-Gyeongbokgung-Gwanghwamun' illustrated in FIG. 10C is shorter than "Gyeonghuigung-Gyeongbokgung-Gwanghwamun Square' illustrated in FIG. 10D, the terminal selects the tour course illustrated in FIG. 10C and displays the selected tour course. The terminal also displays a guide screen that prompts the user to select a tour course. The terminal receives thumbnail images of media files generated in each sub-place from the server and displays the received thumbnail images. The thumbnail images may be displayed along with images of the sub-places corresponding to the thumbnail images on a map in a preset display area 1010, as illustrated in FIG. 10E or separately in a display area 1020 as illustrated in FIG. 10F. The terminal further displays information about a planned tour course. For example, the terminal further displays information about the distances and travel times between the sub-places in a preset display area 1030 (FIG. 10F). The information about the tour course is generated by and received from, the server.

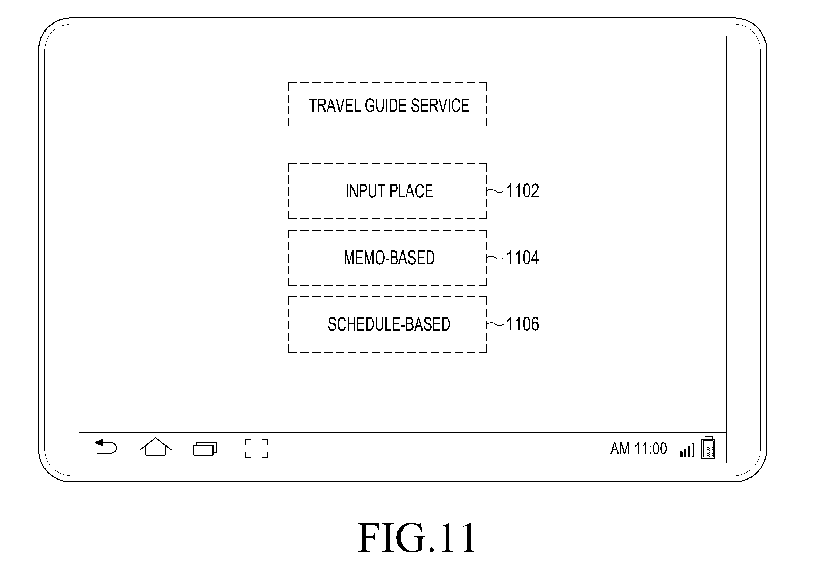

In an embodiment, place information is acquired from information stored in the terminal. For example, the place information is acquired from schedule information and memos of the user stored in the terminal. Upon receipt of a user request, the terminal acquires place information from the schedule information or memos of the user and configures a travel guide based on the place information. For this purpose, the terminal provides a menu that enables configuration of a travel guide based on schedule information or a memo on a guide screen designed for travel guide configuration. An example is illustrated in FIG. 11 where in response to user selection of a menu item 1102, a guide screen is provided to the user to enable the user to directly input place information. The terminal transmits the user-input place information to the server. When the user selects a menu 1104, the terminal extracts place information from a stored memo and transmits the extracted place information to the server. When the user selects a menu 1106, the terminal acquires schedule information of the user and performs an operation of configuring a travel guide based on the schedule information

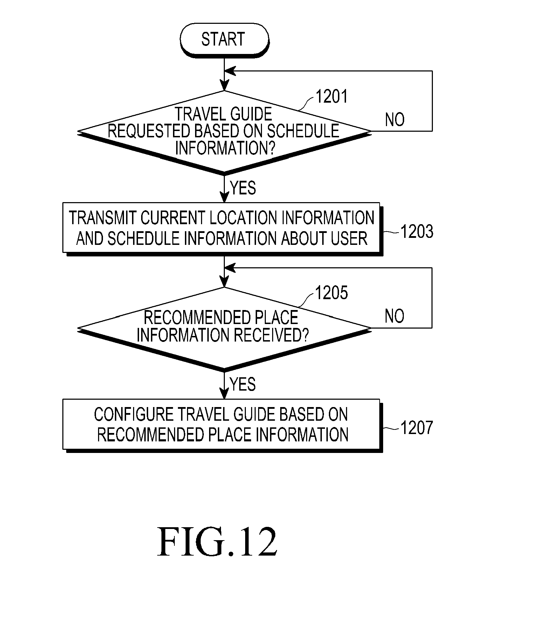

FIG. 12 is a flowchart of a process for providing a travel guide in a terminal where the terminal determines whether a request for configuring a travel guide based on schedule information has been received in step 1201. Upon receipt of the request for configuring a travel guide based on schedule information, the terminal goes to step 1203. The request for configuring a travel guide based on schedule information is issued by selecting the menu 1106 displayed on the guide screen illustrated in FIG. 11.

The terminal transmits current location information and schedule information about the user to the server in step 1203. The current location information about the user may be GPS information acquired from a sensor. In step 1205, the terminal determines whether information about a recommended place has been received from the server. The information about the recommended place refers to information about a place recommended for the user to visit, determined according to the current location information and schedule information about the user and a current time and includes, the name of the recommended place, the location of the recommended place, and a thumbnail image of a media file generated in the recommended place, for example. In step 1207, the terminal configures a travel guide based on the received recommended place information.

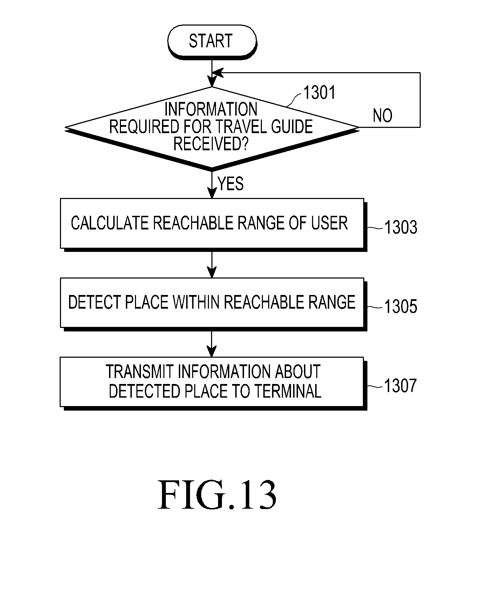

FIG. 13 is a flowchart illustrating a method of providing a travel guide in a server where the server determines whether information required to configure a travel guide has been received from the terminal in step 1301. Upon receipt of the information required to configure a travel guide, the server in step 1303 calculates a range that can be visited by the user. In response to receipt of current location information and schedule information about the user from the terminal, the server determines that the information required to configure a travel guide has been received.

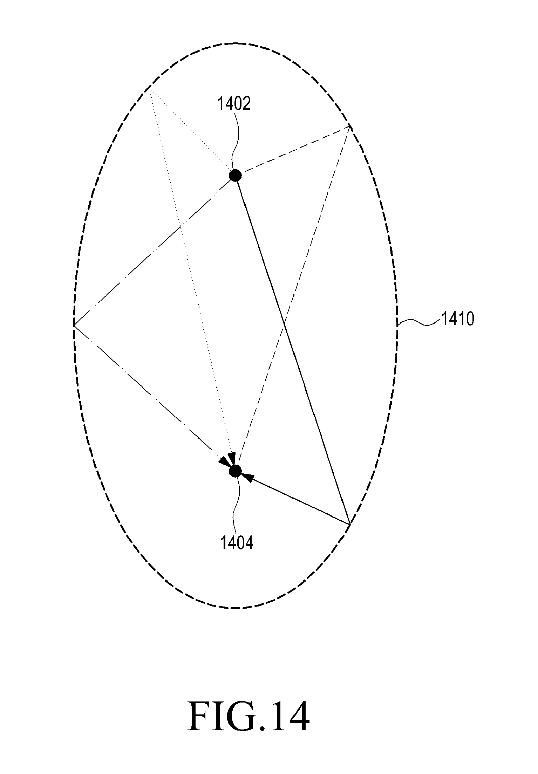

The terminal calculates a reachable range that can be visited by the user based on the current location information about the user, next destination information included in the schedule information, and an available time. Referring to FIG. 14, if the current time is 11:00 and the next scheduled time is 13:00, the server determines the time difference, two hours as an available time and calculates a reachable range 1410 within which the user may move from a current location 1402 to the next destination 1404 within two hours. In step 1305, the server detects places within the reachable range of the user. The places are detected using a predetermined map database associating distances between places and travel times and the server detects places within the reachable range of the user by comparing the reachable range with the map database derived range reachable in two hours. The server transmits information about the detected places to the terminal in step 1307. The detected place information includes at least one of the names of the places, the locations of the places, and thumbnail images of media files generated in the places.

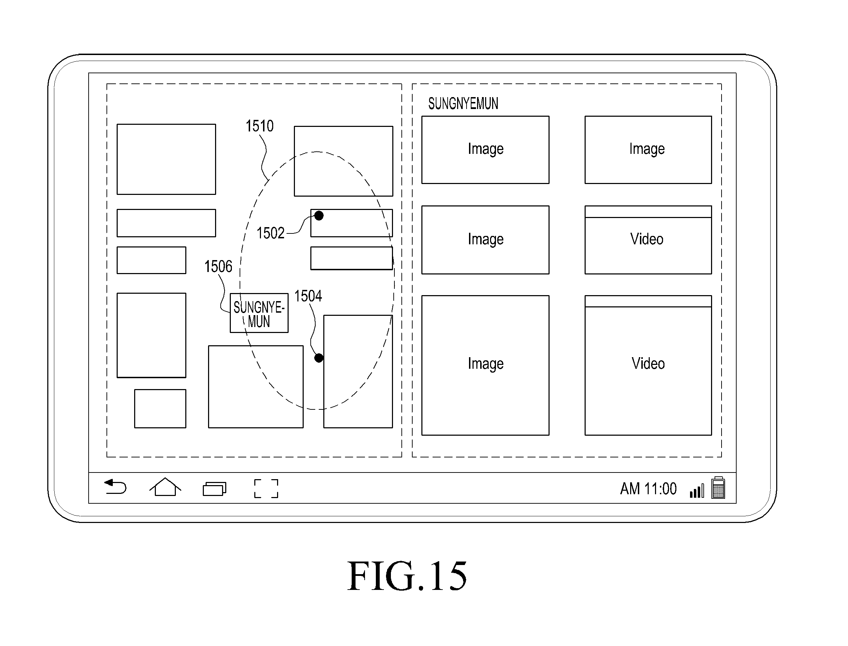

FIG. 15 illustrates a travel guide screen configured to provide guidance on recommended places within a reachable range of the user based on information received from the server. The received information includes information about the locations of recommended places within a reachable range 1510 of the user and thumbnail images of media files generated in the recommended places. In FIG. 15, a place "Sungnyemun" 1506 is located within the reachable range 1510 of the user, by way of example.

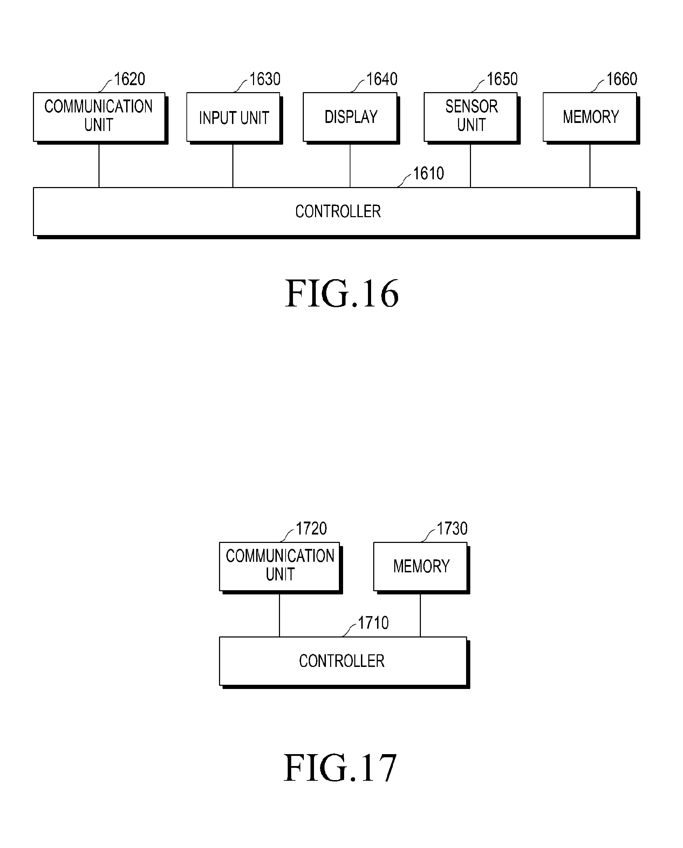

FIG. 16 shows a block diagram of a travel guide configuring apparatus in a terminal including, a controller 1610 that transmits place information about a place for which a travel guide is requested to the server through a communication unit 1620. controller 1610 receives from the server visit time information about the place generated based on times of generating media files in the place through the communication unit 1620, and configures a travel guide based on the received visit time information. The visit time information specifies the number of media files generated in the place during predetermined intra-day time periods or an intra-day time period during which the most or fewest media files were generated in the place.

The controller 1610 configures the travel guide to include information about the intra-day time period during which the most or fewest media files were generated in the place and receives thumbnail images of the media files generated in the place from the server. The controller 1610 configures the travel guide to include the received thumbnail images. Further, if the place includes a plurality of sub-places, the controller 1610 receives visit time information about each sub-place generated based on times of generating media files in each sub-place from the server through the communication unit 1620. The controller 1610 plans a tour course running through the sub-places based on the visit time information about each sub-place and considers the distances between the sub-places in planning the tour course. Additionally, the controller 1610 plans a tour course running through sub-places for which visit times are set after a current time.

The controller 1610 transmits current location information about the user acquired from a sensor unit 1650 and schedule information about the user stored in a memory 1660 to the server through the communication unit 1620, receives information about recommended places within a reachable range of the user from the server through the communication unit 1620, and configures a travel guide based on the received recommend place information. The recommended place information includes information about at least one of the names of the recommended places, the locations of the recommended places, and thumbnail images of media files generated in the recommended places.

The communication unit 1620 communicates with the server in various communication modes and an input unit 1630 receives information required to configure a travel guide from the user under the control of the controller 1610 and provides the received information to the controller 1610. A display 1640 displays a guide screen in a predetermined display area so that the user may request a travel guide on the guide screen. The display 1640 further presents a configured travel guide in a preset display area under the control of the controller 1610. The input unit 1630 and the display 1640 may be configured as a touch screen and the sensor unit 1650 includes a GPS sensor, acquires current location information about the user, and provides the location information to the controller 1610. The memory 1660 stores schedule information and memos of the user.

FIG. 17 shows a block diagram of a travel guide configuring apparatus in a server where a controller 1710 receives place information indicating a place for which a travel guide is requested from the terminal through a communication unit 1720, analyzes times of generating media files in the place, generates visit time information about the place based on analysis results, and transmits the visit time information to the terminal through the communication unit 1720. The visit time information specifies the number of media files generated in the place during predetermined intra-day time periods or an intra-day time period during which the most or fewest media files were generated in the place. The controller 1710 assigns a weight to each media file in generating the visit time information. For example, the controller 1710 assigns a higher weight to a media file having a higher number of views, a media file created by a person with a higher reliability, or a media file having a higher rating. The controller 1710 transmits thumbnail images of the media files generated in the place along with the visit time information to the terminal. The media files may be media files stored in a memory 1730 or collected from the Web. The controller 1710 determines whether the place indicated by the place information received from the terminal includes a plurality of sub-places as previously described and if the place indicated by the place information received from the terminal includes a plurality of sub-places, the controller 1710 generates visit time information about each sub-place based on times when media files were generated in the sub-place and transmits the visit time information to the terminal.

Upon receipt of current location information and schedule information about the user from the terminal, the controller 1710 calculates a reachable range of the user based on the received information and a current time. The controller 1710 detects places within the reachable range as recommended places and transmits information about the recommended places to the terminal. The recommended place information includes at least one of the names of the recommended places, the locations of the recommended places, and thumbnail images of media files generated in the recommended places. The communication unit 1720 communicates with the terminal in various communication schemes. The memory 1730 stores a plurality of media files and map information and stores tree-type place information as illustrated in FIG. 7.

As is apparent from the above description of the present invention, a visit time for a place can be recommended to a user. Furthermore, a recommended place to visit can be guided to the user, taking into account the schedule of the user.

The system involves the processing of input data and the generation of output data. This input data processing and output data generation may be implemented in hardware or software in combination with hardware. For example, specific electronic components may be employed in a mobile device or similar or related circuitry for implementing the functions associated with the exemplary embodiments of the present invention as described above. Alternatively, one or more processors operating in accordance with stored instructions may implement the functions associated with the exemplary embodiments of the present invention as described above. If such is the case, it is within the scope of the present disclosure that such instructions may be stored on one or more processor readable mediums. Examples of the processor readable mediums include Read-Only Memory (ROM), Random-Access Memory (RAM), CD-ROMs, magnetic tapes, floppy disks, and optical data storage devices. The processor readable mediums can also be distributed over network coupled computer systems so that the instructions are stored and executed in a distributed fashion. Also, functional computer programs, instructions, and instruction segments for accomplishing the present invention can be easily construed by programmers skilled in the art to which the present invention pertains

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A method of providing a travel guide in a terminal, the method comprising:
transmitting place information identifying a place, to a computer, in response to a travel guide being requested for the place;
determining visit time information about the place generated from media files received from the computer in response to the transmitted place identification, the visit time information being determined based on times at which corresponding media files were generated in the place; and
configuring a travel guide based on the received visit time information.

2. The method of claim 1, wherein the configuration of the travel guide comprises configuring the travel guide to include information about an intra-day time period in which most or fewest media files were generated in the place.

3. The method of claim 1, the method further comprising:
transmitting
(a) current location information and
(b) schedule information of a user, to a computer;
receiving recommended place information indicating a recommended place within a reachable range of the user from the computer in response to the transmitted information; and
configuring a travel guide based on the received recommended place information.

4. The method of claim 3, wherein the recommended place information includes at least one of information indicating a name of the recommended place, information indicating a location of the recommended place, and a thumbnail image of a media file generated in the recommended place.

5. A method of providing a travel guide in a computer, the method comprising:
receiving place information identifying a place from a terminal, in response to a travel guide being requested for the place;
analyzing times at which corresponding media files were generated in the place;
generating visit time information about the place in response to an analysis result; and
transmitting the generated visit time information to the terminal.

6. The method of claim 5, the method further comprising:
receiving,
(a) current location information and
(b) schedule information of a user from a user;
calculating a reachable range of the user in response to the current location information and schedule information of the user and a current time;
detecting a place within the reachable range; and
transmitting information about the detected place to the terminal.

7. The method of claim 6, wherein the information about the detected place includes at least one of, information about a name of the detected place, information about a location of the detected place, and a thumbnail image of a media file generated in the detected place.

8. The method of claim 1 or claim 5, wherein the visit time information indicates the number of media files generated in the place during predetermined intra-day time period, a intra-day time period in which most media files were generated in the place, or a intra-day time period in which fewest media files were generated in the place, and the visit time information is generated based on a weight assigned to each of the media files, wherein the weight assigned to each of the media files is determined based on at least one of, the number of views for the media file, a rating of the media file, and reliability of a creator of the media file.

9. An apparatus of providing a travel guide in a terminal, the apparatus comprising:
a communication unit; and
a controller configured to,
transmit place information identifying a place to a computer using the communication unit, in response to a travel guide being requested for the place,
receive visit time information via the communication unit about the place, the visit time information being generated from media files based on times at which corresponding media files were generated in the place and
configure a travel guide based on the received visit time information.

10. The apparatus of claim 9, wherein the controller configures the travel guide to include information about a intra-day time period in which most or fewest media files were generated in the place.

11. The apparatus of claim 9, the apparatus further comprising:
a sensor unit configured to acquire current location information about a user;
a memory configured to store schedule information about the user; and
wherein the controller configured to transmit the current location information received from the sensor unit and the schedule information stored in the memory to the computer through the communication unit, to receive recommended place information indicating a recommended place within a reachable range of the user from the computer through the communication unit, and to configure a travel guide based on the received recommended place information.

12. The apparatus of claim 11, wherein the recommended place information includes at least one of, information about a name of the recommended place, information about a location of the recommended place, and a thumbnail of a media file generated in the recommended place.

13. An apparatus for providing a travel guide in a computer, the apparatus comprising:
a communication unit; and
a controller configured to,
receive place information identifying a place from a terminal through the communication unit in response to a travel guide being requested for the place,
analyze times of generating media files in the place and
generate visit time information about the place based on an analysis result, and to transmit the generated visit time information to the terminal through the communication unit.

14. The apparatus of claim 13, wherein the controller configured to, receive,
(a) current location information and
(b) schedule information of a user from a user through the communication unit,
calculate a reachable range of the user based on the current location information and schedule information of the user and a current time,
detect a place within the reachable range, and
transmit information about the detected place to the terminal through the communication unit.

15. The apparatus of claim 14, wherein the information about the detected place includes at least one of, information indicating a name of the detected place, information about a location of the detected place, and a thumbnail of a media file generated in the detected place.

16. The apparatus of claim 9 or claim 13, wherein the visit time information indicates the number of media files generated in the place during predetermined intra-day time period, a intra-day time period in which most media files were generated in the place, or a intra-day time period in which fewest media files were generated in the place, and the visit time information is generated based on a weight assigned to each of the media files, wherein the weight assigned to each of the media files is determined based on at least one of, the number of views for the media file, a rating of the media file, and reliability of a creator of the media file.
